# DEMANDE DE BREVET EUROPEEN

(11) **EP 0 994 618 A1**
(43) Date de publication de la demande: **19.04.2000**
(21) Numéro de dépôt: 99402547.6
(22) Date de dépôt: 15.10.1999
(51) Int. Cl.: H04N 1/50

(54) **Dispositif d'impression laser polychrome réglable**

(30) Priorité: 16.10.1998 FR 9812987
(71) Demandeur: SAGEM SA, 75116 Paris (FR)
(72) Inventeur: Nauche, Gilles, 92400 Courbevoie (FR)
(74) Mandataire: Bloch, Gérard

(57) **Abrégé**

Le dispositif d'impression laser comporte une pluralité d'ensembles d'impression en ligne (1-4) pour imprimer une pluralité d'images monochromes reconstituant une image polychrome, et comporte un processeur pour commander l'impression, sur un support commun d'impression (10), de mires correspondant respectivement à divers couples ensemble d'impression (1-4) - valeur de paramètre de réglage de l'ensemble d'impression (1-4) pour commander des circuits (26-29) de contrôle des valeurs de paramètre de réglage associées aux mires.

## Description

La présente invention concerne les imprimantes laser à architecture dite tandem, selon laquelle plusieurs ensembles d'impression d'une couleur spécifique à chacun sont montés en ligne. Les feuilles à imprimer défilent successivement devant chaque ensemble d'impression monochrome aux couleurs primaires que sont le jaune, le magenta, le cyan et le noir, pour reconstituer l'image polychrome voulue.

Les images monochromes doivent être imprimées avec des cadrages relatifs précis afin, d'une part, d'éviter des recouvrements parasites entre plages de couleurs différentes et, d'autre part, de permettre un recouvrement précis des plages d'images monochromes qu'il convient de superposer pour obtenir une couleur secondaire, ou composite.

Dans le premier cas, un recouvrement parasite produirait un liseré de couleur composite et, dans le second cas, les plages imprimées selon plusieurs couleurs primaires présenteraient des bords partiellement découverts, n'ayant pas la couleur composite voulue, par manque d'une ou plusieurs couleurs primaires.

Le cadrage des images monochromes nécessite une synchronisation parfaite entre les quatre ensembles d'impression en ligne, c'est-à-dire que chacun doit imprimer la feuille, qui défile en continu, à l'instant précis où la plage à imprimer se présente. Il faut donc imprimer une image monochrome, dans chaque ensemble d'impression, avec un retard, par rapport à l'ensemble précédent, égal au temps de parcours de la distance séparant ceux-ci. Or, cette distance peut légèrement varier lorsqu'on remplace la cartouche de poudre d'impression, ou toner, d'un des ensembles d'impression. De même, un décalage latéral d'un des ensembles n'est pas à exclure.

En outre, la couleur du toner peut dériver par vieillissement et varier selon les conditions d'environnement, ou encore présenter diverses nuances d'un fournisseur à l'autre, et fausser la restitution des couleurs primaires et composites.

Bref, les images monochromes présentent une dispersion de leur qualité de restitution.

La présente invention vise à permettre de s'affranchir de ces problèmes de dispersion dans l'impression des images monochromes constituant une image polychrome.

A cet effet, l'invention concerne un dispositif d'impression laser comportant une pluralité d'ensembles d'impression en ligne pour imprimer une pluralité d'images monochromes reconstituant une image polychrome, caractérisé par le fait qu'il comporte des moyens pour commander l'impression, sur un support commun d'impression, de mires correspondant respectivement à divers couples ensemble d'impression - valeur de paramètre de réglage de l'ensemble d'impression pour commander des moyens de contrôle des valeurs de paramètre de réglage associées aux dites mires.

On peut ainsi déterminer immédiatement et directement la dérive d'un paramètre et la corriger, sans devoir effectuer une succession d'essais qui viserait à converger vers le bon réglage.

Avantageusement, il est prévu des moyens de lecture optique des mires imprimées pour en fournir l'image à des moyens de traitement d'image agencés pour commander les moyens de contrôle.

Le dispositif d'impression réalise ainsi un autocalibrage, sans intervention externe, ce qui libère les utilisateurs de toute contrainte et élimine tout risque d'erreur.

L'invention sera mieux comprise à l'aide de la description suivante d'une forme de réalisation préférée du dispositif d'impression laser de l'invention, en référence au dessin annexé, sur lequel :
- la figure 1 en est un schéma par blocs fonctionnels, et
- les figures 2 et 3 représentent des mires de réglage.

Le système d'impression de l'invention appartient ici à un télécopieur et comporte dans cet exemple quatre ensembles d'impression en ligne, référencés 1, 2, 3 et 4, formant une architecture dite tandem.

Chaque ensemble 1-4 comporte, de façon classique, un tambour électrostatique rotatif d'impression, respectivement 6, 7, 8 et 9, sur lequel une tête d'écriture à émetteur laser, respectivement 11, 12, 13, 14, commandée par des données d'image, forme une image électrostatique latente par balayage de génératrices successives. Le passage de cette image électrostatique devant une cartouche de poudre toner d'impression monochrome, respectivement 16, 17, 18 et 19, révèle l'image, par attraction électrostatique, et les particules de poudre plaquées sur le tambour 6-9 sont ensuite transférées, selon l'image, sur un support d'impression 10, tel qu'une feuille ou bande de papier.

Les couleurs primaires jaune, cyan, magenta, et le noir que l'on qualifiera de couleur, sont ainsi chacune imprimées successivement par l'un des ensembles 1-4 spécifique à chacune. Chaque ensemble 1-4 imprime donc une image monochrome et la composition additive des quatre images monochromes restitue l'image polychrome voulue. Il est ici prévu, en fin de la ligne 15 que suivent les feuilles 10 selon la flèche, un lecteur optique ou scanner couleur 5.

Les ensembles d'impression 1-4 sont commandés par un bloc de commande qui, outre la fourniture classique des données à imprimer, ajuste des paramètres de réglage des impressions des images monochromes dans les ensembles 1-4.

Dans cet exemple, le bloc de commande règle le cadrage relatif des images monochromes, à la fois dans le sens longitudinal du défilement des feuilles 10 selon la ligne 15 et dans le sens transversal. On peut ainsi, d'une part, éviter des recouvrements parasites entre zones ou plages, normalement disjointes, d'images monochromes et, d'autre part, obtenir tout recouvrement voulu entre zones d'image monochromes normalement superposées. Les zones de couleurs secondaires, ou composites, sont ainsi exemptes de bords qui présenteraient une couleur différente de celle voulue par le fait qu'ils seraient "découverts" en ce qui concerne l'une au moins des couleurs primaires. De plus, l'intensité de l'impression de chaque couleur primaire peut être réglée, afin d'obtenir la couleur primaire désirée de même que les couleurs composites obtenues par composition de celle-ci avec une ou plusieurs autres.

L'électronique du bloc de commande va maintenant être décrite.

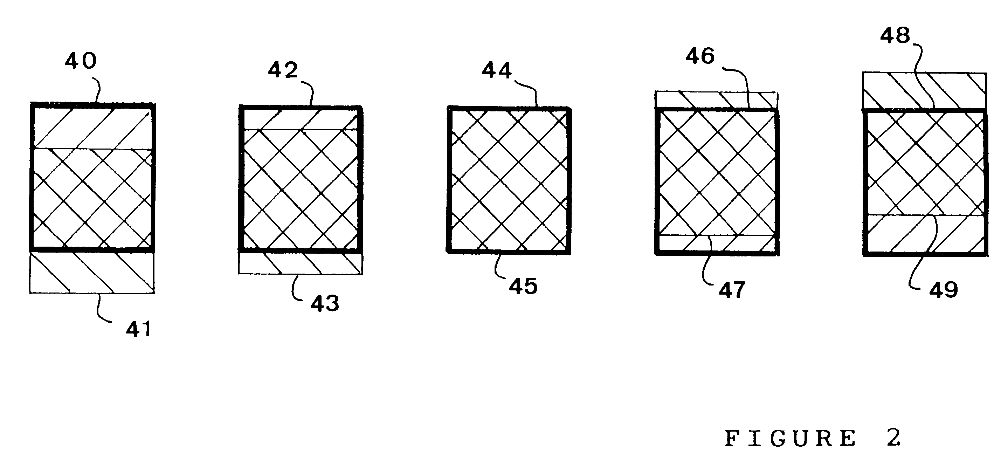

Le bloc de commande comporte une base de temps 30 rythmant le fonctionnement d'un microprocesseur 31. Une mémoire 32 contient des images de mires de référence à imprimer (figure 2) et une mémoire vive 33 est reliée au scanner 5 pour en mémoriser les images de mires qu'il relit. Dans le microprocesseur 31, un circuit d'analyse 34, de traitement d'image, relié aux mémoires 32 et 33, comporte un logiciel d'analyse des images de mires permettant de comparer les mires de référence aux mires imprimées et relues, afin d'en déterminer une valeur optimale d'au moins un paramètre de réglage d'impression des ensembles 1-4.

Un afficheur 35 permet ici au circuit d'analyse 34 d'afficher la valeur optimale du ou des paramètres, pour en informer l'utilisateur, afin qu'il effectue les réglages voulus, si l'on fonctionne en mode manuel. Sinon, les réglages sont effectués automatiquement. Comme indiqué plus haut, il s'agit ici du cadrage entre images monochromes et du réglage de l'intensité de chaque couleur primaire. Quatre mémoires d'images monochromes 21, 22, 23 et 24 commandent les têtes laser vidéo respectives 11-14 selon un séquencement commandé par des circuits séquenceurs de contrôle respectifs 26, 27, 28 et 29 de lecture/écriture, eux-mêmes commandés par le microprocesseur 31.

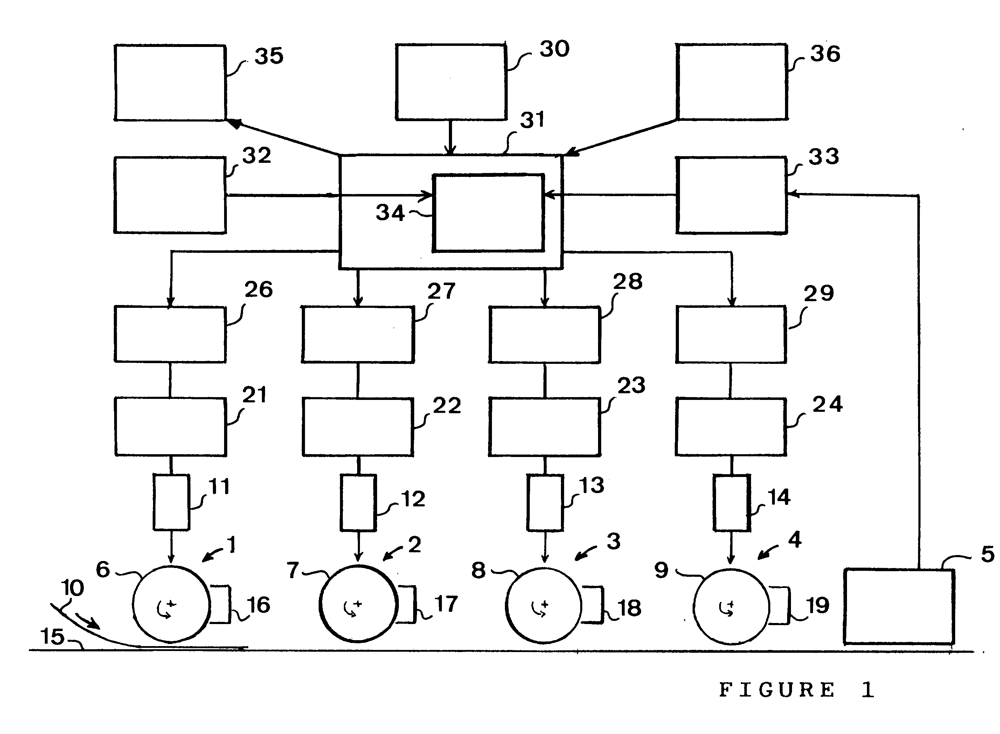

Les divers réglages des ensembles 1-4 sont effectués à partir du microprocesseur 31. Pour le cadrage longitudinal des images monochromes, le microprocesseur 31 décale, en avance ou en retard, l'instant de début d'impression (première ligne) de chaque image monochrome. Ainsi, un retard va entraîner une descente de l'image monochrome dans la feuille 10, défilant à vitesse fixe vers la droite sur la figure 1, avec donc une impression plus éloignée du bord antérieur de celle-ci, et inversement pour une avance à l'impression. Un décalage latéral est obtenu, selon le même principe, en retardant ou anticipant la commande de la tête laser de balayage ligne 11-14, balayage qui est transversal à la direction d'avance des feuilles 10, et donc perpendiculaire au plan de la figure 1.

A cet effet, le microprocesseur 31 règle les circuits séquenceurs 26-29, de contrôle de valeurs de paramètre de réglage associées aux mires, pour qu'ils présentent entre eux les retards voulus pour cadrer longitudinalement entre elles les images monochromes. Autrement dit, chaque ensemble 2-4 présente, par rapport au précédent 1-3, un retard qui équivaut à l'impression (fictive) d'un certain nombre de lignes correspondant à la distance séparant les deux ensembles 1-4 considérés. On ajuste donc le cadrage en ajustant le décalage temporel d'impression entre ensembles 1-4 successifs. Cela équivaut à régler le nombre de lignes fictives en fonction de la distance effective entre ensembles 1-4. Le réglage latéral a, quant à lui, une amplitude limitée à uniquement une faible portion de ligne, pour décaler le signal vidéo correspondant vers un bord de feuille ou l'autre, en réglant la durée d'un temps mort de garde en début d'un signal d'image de ligne. On conçoit qu'il suffit de mesurer et régler le cadrage de trois quelconques des ensembles 1-4 par rapport au quatrième, par exemple celui imprimant le jaune dans ce qui est expliqué plus loin.

L'intensité des couleurs est réglée en ajustant le niveau de modulation de la tête laser 11-14 par les données d'image issue de la mémoire correspondante 21-24. Les circuits séquenceurs 26-29 commandent à cet effet le gain de quatre amplificateurs vidéo respectifs, non représentés. Le réglage d'une couleur composite peut en outre être effectué par une modification de l'influence relative des diverses couleurs primaires, obtenue par les réglages de gain ci-dessus.

Pour des réglages en mode manuel, un clavier 36 du microprocesseur 31 permet de spécifier le paramètre à régler et d'en choisir la valeur, ceci à partir des indications de l'afficheur 35 fournies par le circuit d'analyse 34 ou simplement par examen visuel de la feuille 10 imprimée. Le scanner 5 en fournit éventuellement, sur l'écran 35, une image agrandie, de résultat brut, que l'utilisateur peut alors interpréter à la place du circuit d'analyse 34. Le microprocesseur 31 retranscrit les valeurs de réglage de consigne ainsi saisies par des commandes correspondantes, comme expliqué plus haut pour le mode automatique.

Un utilisateur peut, par le clavier 36, lancer une procédure de test et de réglage des paramètres d'impression. La mémoire 32 comporte, comme l'illustre la figure 2, une pluralité de mires de réglage du cadrage et des couleurs.

Sur la figure 2 est représentée une série de cinq mires associant deux mêmes couleurs primaires, ici le jaune et le magenta formant du rouge, pour le cadrage transversal. Les mires sont ici alignées dans la direction de défilement de la feuille de papier 10, supposée être horizontale sur la figure 2.

Chaque mire comporte deux plages, de mêmes tailles, une par couleur, d'images monochromes, globalement superposées, 40-41, 42-43, 44-45, 46-47 et 48-49. La mire centrale 44-45 représente un cadrage parfait. Les mires extrêmes 40-41 et 48-49 représentent deux cadrages latéraux très défectueux, la plage magenta 41, respectivement 49, étant nettement plus basse, respectivement plus haute, que la plage jaune 40 ou 48. Les mires 42-43 et 46-47 représentent des décalages intermédiaires symétriques.

Les décalages extrêmes des mires 40-41 et 48-49 ont une amplitude correspondant au maximum de décalage mécanique latéral auquel on peut s'attendre entre les ensembles 1-4. Deux autres séries de mires du même genre (non représentées) permettent de comparer le cadrage latéral de l'un des ensembles d'impression 1-4 ci-dessus, celui pour le jaune par exemple, avec ceux des deux autres ensembles 1-4 restants, qui traitent le cyan et le noir. Le groupe de trois séries de cinq mires permet ainsi de tester le cadrage latéral entre les quatre ensembles d'impression 1-4. D'une façon générale, les mires correspondent à divers couples ensemble d'impression 1 à 4 - valeur de paramètre de réglage de l'ensemble d'impression 1 à 4.

On notera cependant que, en mode automatique, le circuit d'analyse 34 pourrait, en variante, déterminer la correction à apporter, à la valeur courante de cadrage, à partir de la mesure du décalage d'une seule mire imprimée, 44-45 par exemple, dans chacune des trois séries ci-dessus. Dans cet exemple, comme il est prévu un mode manuel de réglage à partir d'un examen visuel des résultats d'impression (feuille 10 ou écran 35), la succession de mires, à décalages progressifs, rangées dans cet ordre, facilite l'examen, visuel par l'opérateur. Celui-ci peut déterminer directement, sans mesure, quelle est celle des cinq images de la suite 40-49 imprimée qui présente un défaut de cadrage minimal. Il peut même être prévu un plus grand nombre de telles mires pour augmenter la précision. La position, dans la rangée 40-49, de la mire imprimée avec un décalage nul (ou la position à décalage nul obtenue par interpolarisation entre deux mires imprimées voisines à décalages de signes opposés) constitue donc un pointeur sur l'échelle des décalages 40-49 qui indique le signe et l'amplitude de la correction de cadrage à apporter pour restituer exactement les mires 40-49 d'origine et donc aussi toute autre image. Le circuit d'analyse 34 fonctionne ici selon ce principe. Un essai facultatif, après correction, doit normalement montrer à l'opérateur le parfait cadrage pour la mire 44-45.

Pour le cadrage longitudinal, il est prévu de même un autre groupe de trois séries de cinq mires, chaque mire étant tournée d'un quart de tour par rapport à celles de la figure 2 (ou défilant alors verticalement sur la figure 2 et non plus horizontalement).

Pour le test des intensités et nuances de couleurs, il peut être prévu d'imprimer les couleurs primaires et toutes les couleurs composites, formées de deux à quatre couleurs primaires. En pareil cas, seize mires de couleurs différentes fournissent toutes les compositions de couleurs secondaires possibles et les couleurs primaires.

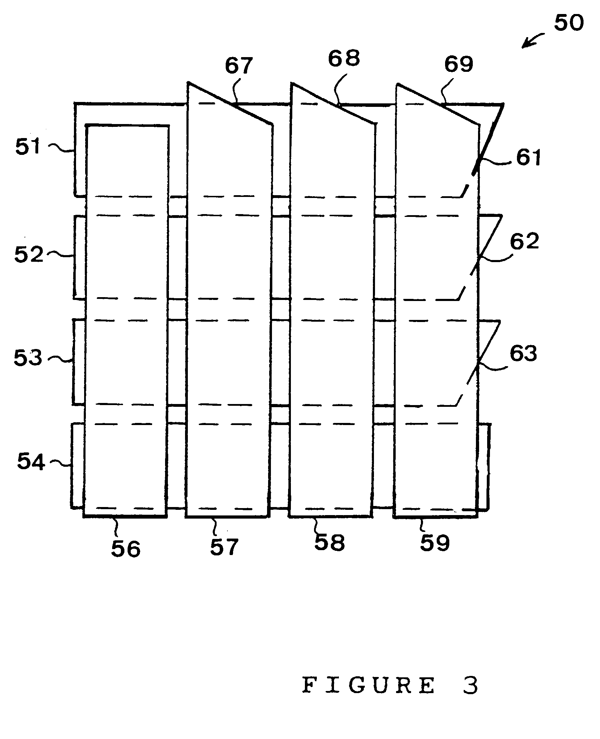

La miré globale 50 de la figure 3 est une matrice carrée regroupant des mires élémentaires et permet de déterminer les deux types de décalages ci-dessus entre les quatre images monochromes et les défauts de couleurs primaires et de toute couleur composite obtenue à partir d'une paire de celles-ci.

Elle comporte un jeu de quatre bandes longitudinales (horizontales sur la figure 3) 51, 52, 53, 54 chacune à une couleur spécifique : jaune, cyan, magenta, noir dans cet ordre et un jeu homologue de quatre bandes transversales (verticales sur la figure) 56, 57, 58, 59 ici dans le même ordre que les bandes horizontales 51-54 et coupant celles-ci. Pour la simplicité du dessin, les bandes verticales 56-59 sont représentées comme étant au-dessus des bandes horizontales 51-54. En fait, c'est l'ordre d'impression des couleurs primaires qui détermine l'ordre de superposition des couches de couleurs.

La matrice 50 permet d'obtenir les quatre couleurs primaires (diagonale secondaire) et douze combinaisons par paires de celles-ci, symétriques deux à deux par rapport à cette diagonale secondaire. Pour obtenir des couleurs composites formées à partir de trois ou quatre couleurs primaires, on peut prévoir un recouvrement partiel entre bandes parallèles voisines.

En outre, les trois premières bandes 51, 52 et 53 comportent un bord d'extrémité incliné, selon un angle aigu relativement faible, sur le bord longitudinal externe de l'une des deux bandes verticales extrêmes, ici la bande 59, qui est la dernière. Environ la moitié des bords d'extrémité inclinés ci-dessus se trouve en superposition (ici cachés) avec la bande 59. Il est ainsi formé des paires de plages partiellement superposées présentant deux bords respectifs se coupant à angle aigu.

Les trois dernières bandes verticales 57, 58 et 59 présentent de même des bords respectifs d'extrémité inclinés sur le bord supérieur de la première bande horizontale 51, de couleur différente de ces trois bandes.

En cas de décalage latéral (vertical sur la figure 3) entre les images monochromes, la bande jaune 51 servant de référence relative de position, les points d'intersection 67, 68 et 69 des bords supérieurs inclinés des bandes 57, 58 et 59 des trois autres couleurs avec le bord longitudinal de la bande 51 vont se déplacer horizontalement. La faible inclinaison de ces bords inclinés sur le bord longitudinal de référence de la bande 51 a pour effet d'amplifier le déplacement horizontal de mesure, par rapport au déplacement vertical qui en est la cause, et donc aussi la précision de mesure.

Trois graduations horizontales (non représentées) sur le bord longitudinal horizontal (51) au droit des bandes 57, 58 et 59, permettent ainsi de lire directement la position précise des trois points d'intersection 67, 68 et 69 et d'en déduire les corrections de décalage latéral à apporter aux ensembles 2 à 4. Les graduations peuvent en particulier fournir directement la valeur de la correction.

Le principe de mesure est le même pour les décalages longitudinaux des ensembles 1 à 3 qui entraînent un déplacement vertical des trois points d'intersection 61, 62 et 63 des bords inclinés des bandes 51, 52 et 53 avec la bande noire 59.

## Revendications

1. Dispositif d'impression laser comportant une pluralité d'ensembles d'impression en ligne (1-4) pour imprimer une pluralité d'images monochromes reconstituant une image polychrome, caractérisé par le fait qu'il comporte des moyens (31, 33) pour commander l'impression, sur un support commun d'impression (10), de mires (40-49, 50) correspondant respectivement à divers couples ensemble d'impression (1-4) - valeur de paramètre de réglage de l'ensemble d'impression (1-4) pour commander des moyens (26-29) de contrôle des valeurs de paramètre de réglage associées aux dites mires (40-49, 50).

2. Dispositif selon la revendication 1, dans lequel il est prévu des moyens (5) de lecture optique des mires imprimées (40-49) pour en fournir l'image à des moyens de traitement d'image (24) agencés pour commander les moyens de contrôle (26-29).

3. Dispositif selon l'une des revendications 1 et 2, dans lequel les moyens de contrôle (26-29) sont agencés pour ajuster le cadrage relatif des images monochromes.

4. Dispositif selon la revendication 3, dans lequel les moyens de contrôle (26-29) sont agencés pour ajuster le cadrage par ajustement d'un décalage temporel d'impression entre les ensembles d'impression successifs (1-4).

5. Dispositif selon la revendication 4, dans lequel le cadrage est ajusté latéralement en réglant un temps de garde de début d'un signal d'image de ligne.

6. Dispositif selon l'une des revendications 1 à 5, dans lequel les moyens de contrôle (26-29) sont agencés pour ajuster l'intensité de couleur d'images monochromes.

7. Dispositif selon l'une des revendications 1 à 6, dans lequel les mires (40-49, 50) représentent divers cadrages de paires (40-41) d'images monochromes, en fonction de paramètres de décalage longitudinal et transversal par rapport à la ligne (15) des ensembles d'impression (1-4).

8. Dispositif selon l'une des revendications 1 à 7, dans lequel les mires (50) comportent des paires de plages (51-54, 56-59) partiellement superposées présentant deux bords respectifs se coupant à angle aigu (61-63, 67-69).

9. Dispositif selon la revendication 8, dans lequel une échelle de mesure de décalage est associée aux bords des plages (51-54, 56-59).
